Europäisches Patentamt

European Patent Office

Office européen des brevets

(11) Veröffentlichungsnummer: **0 198 120**
**A2**

(12) **EUROPÄISCHE PATENTANMELDUNG**

(21) Anmeldenummer: **85115768.5**

(22) Anmeldetag: **11.12.85**

(51) Int. Cl.⁴: **G 11 B 5/127**, G 11 B 5/147

(30) Priorität: **04.04.85 DE 3512344**

(43) Veröffentlichungstag der Anmeldung: **22.10.86**
**Patentblatt 86/43**

(84) Benannte Vertragsstaaten: **AT DE FR GB IT**

(71) Anmelder: **GRUNDIG E.M.V. Elektro-Mechanische
Versuchsanstalt Max Grundig holländ. Stiftung & Co.
KG., Kurgartenstrasse 37, D-8510 Fürth (DE)**

(72) Erfinder: **Eberle, Karl, Blütenstrasse 15,
D-8501 Cadolzburg (DE)**
Erfinder: **Eckstein, Karl-Heinz, Am Haselbuck 11,
D-8510 Fürth (DE)**
Erfinder: **Kotter, Karl-Heinz Dipl.-Ing. Dipl.-Wirtsch.-Ing.,
Ackerstrasse 10, D-8502 Zirndorf-Weiherhof (DE)**

(54) **Magnetkopf mit weichmagnetischen Kernhälften.**

(57) Es wird vorgeschlagen, bei einem Magnetkopf mit einem aus zwei Kernhälften bestehenden Kern, wobei die Kernhälften aus mehreren, voneinander isolierten weichmagnetischen Schichten aufgebaut sind, und mit Kernträgern, die jeweils beidseits der Kernhälften zur Stützung derselben angeordnet sind, die Kernträger aus weichmagnetischem Material aufzubauen und im Spaltbereich durch Einsetzen von nichtmagnetischen Materialien magnetische Nebenschlüsse zu vermeiden. Dadurch wird erreicht, daß es bei der Fertigung der Magnetköpfe unerheblich ist, ob die Kernhälften auch im Rückschlußbereich exakt zur Deckung kommen oder nicht.

- 1 -

MAGNETKOPF MIT WEICHMAGNETISCHEN
KERNHÄLFTEN


BESCHREIBUNG


Die vorliegende Erfindung betrifft einen Magnetkopf,
mit einem aus zwei Kernhälften bestehenden Kern,
wobei die Kernhälften aus mehreren, voneinander isolierten weichmagnetischen Schichten aufgebaut sind,
und mit Kernträgern, die jeweils beidseits der Kernhälften zur Stützung derselben angeordnet sind.

Es ist bekannt, daß bei Videomagnetbandgeräten Magnetköpfe mit kleinen Spurbreiten und extrem kleinen
Spaltbreiten für das Aufzeichnen und Wiedergeben des
Videosignals in großer Stückzahl hergestellt werden.
Die Schwierigkeiten, die zur wirtschaftlichen Herstellung derartig kleiner Magnetköpfe in großer Stückzahl zu überwinden sind, liegen darin, daß der mit dem Arbeitsspalt versehene besonders dünne Magnetkern eine ausreichende mechanische Stabilität und eine hohe Verschleißfestigkeit aufweisen muß.

Aus der Zeitschrift "radio mentor electronic", (1980), Heft 12, Seiten 357 bis 361, ist ein Verfahren zur Herstellung von Magnetköpfen bekannt, wobei als Kernmaterial einkristallines Mangan-Zink-Ferrit verwendet wird. Derartige Einkristalle werden nach einem Tiegelschmelzverfahren hergestellt. Dabei entstehen zylindrische Kristallstäbe, aus denen quaderförmige Blöcke gesägt werden. In den darauffolgenden Arbeitsschritten werden diejenigen Flächen der quaderförmigen Blöcke, die später die Spaltflächen bilden, geläppt und poliert, um die von der mechanischen Vorbearbeitung (Sägen!) verursachten rauhen Schnittflächen zu glätten bzw. um in der Spaltebene ein ungestörtes Kristallgitter zu erhalten. Die übrigen Flächen der quaderförmigen Blöcke werden glattgeschliffen. Danach wird in die quaderförmigen Blöcke das Wickelraumprofil eingeschliffen, in dem später die Spulenwindungen zu liegen kommen. Die Blöcke werden anschließend halbiert und paarweise weiterverarbeitet. Nach dem Festlegen der Spurbreiten werden die geläppten Flächen der Blockhälften beschichtet (beispielsweise mit $SiO_2$, $TiO_2$ oder $Al_2O_3$), wobei die Schichtdicke die spätere Spaltbreite des Kopfes bestimmt. Die Beschichtung erfolgt durch mechanische Masken in der Weise, daß der spätere Spalt ganzflächig, die Rückschlußfläche aber nur teilweise beschichtet wird. Nach der Beschichtung müssen die Blockhälften unter einem Mikroskop exakt derart zusammengefügt werden, daß die Kernhälften sowohl im Spaltbereich als auch im Rückschlußbereich exakt zur Deckung kommen, was in der Praxis mit großen Schwierigkeiten verbunden ist. Die derartig zusammengefügten Blockhälften werden mit Glasfäden versehen, welche nach Erhitzung die Freiräume des Blockes ausfüllen und damit die beiden Hälften des Videokopfes mechanisch fest miteinander verbinden. Die so erhaltenen Blöcke werden an der Kopfspiegelfläche rundgeschliffen und anschließend feingeläppt, um einen guten Band-Kopf-Kontakt zu erhalten. Im letzten Arbeitsschritt erhält man die einzelnen Köpfe durch eine mittels Präzisionstrennmaschinen durchgeführte Zersägung der Blöcke.

Aus der DE-OS 26 42 643 ist ein Magnetkopf für schmale Aufzeichnungsspuren bekannt, bei dem in einer Art Schichtbauweise der dünne Magnetkern aus Ferrit einseitig mit einem nichtmagnetischen Frontteil und einem magnetischen Rückteil flächig verbunden und somit verstärkt ist. Nachteilig hierbei ist, daß der Magnetkopf nicht in einheitlich zu bearbeitenden Blockhälften gefertigt werden kann und als Einzelkopf keinen symmetrischen Aufbau hat.

In den letzten Jahren werden in der magnetischen Aufzeichnungstechnik in steigendem Maße als Aufzeichnungsmedien Metallbänder verwendet, um eine Aufzeichnung mit hoher Dichte und guter Qualität zu ermöglichen. Die Abtastung von Metallbändern mit Ferritköpfen, wie sie oben beschrieben wurden, bereitet jedoch wegen der zu geringen Sättigungsflußdichte des Ferrits Schwierigkeiten. Zur Lösung dieses Problems wurden Magnetkerne aus einer Fe-Al-Si-Legierung (Sendust-Legierung) und Magnetkerne aus amorphem Metall, insbesondere auf Co-Basis, entwickelt, die eine höhere Sättigungsflußdichte aufweisen.

Zur Herstellung von Magnetkopfkernen aus Sendust-Legierungen ist u. a. das Zerstäubungs- oder auch Sputtering-Verfahren bekannt (siehe beispielsweise "IEEE Transactions on Magnetics", Vol. Mag.-13, No.4, July 1977, Seiten 1029 bis 1035, und "IEEE Transactions on Magnetics", Vol. Mag.-13, No.3, May 1977, Seiten 1005 bis 1008). Bei diesem Verfahren wird das Kernmaterial bzw. die Legierungsschicht als mehrschichtige Struktur zwischen zwei beispielsweise aus Glas bestehenden Isolations- bzw. Kernträgerschichten ausgebildet, wobei die Legierungsschichten beispielsweise durch $SiO_2$-Filme voneinander isoliert sind (sogenannte "Sandwichtechnik"). Dieses Verfahren ermöglicht eine hohe Fertigungsgenauigkeit, da die Dicke der Schichten genau kontrollierbar ist, und bringt gegenüber anderen Herstellungsverfahren (z. B. Verfahren mit spanender Formgebung) eine Verringerung der Wirbelstromverluste und damit eine Verbesserung der Magnetkopfeigenschaften mit sich, insbesondere im Hochfrequenzbereich.

Ein Problem bei der Fertigung der bisher beschriebenen Magnetköpfe besteht darin, daß beim Zusammenfügen der beiden Blockhälften die Kernhälften sowohl im Spaltbereich als auch im Rückschlußbereich exakt zur Deckung kommen müssen. Dies bereitet insbesondere bei dünnen Magnetsystemen (Größenordnung 20 $\mu$) in der Praxis große Schwierigkeiten.

Die Aufgabe der Erfindung liegt darin, einen Magnetkopf zu schaffen, bei dem das Erfordernis eines exakten, deckungsgleichen Rückschlusses bezüglich der Kernhälften der Magnetköpfe nicht mehr besteht.

Diese Aufgabe wird durch die im Anspruch 1 angegebenen Merkmale gelöst.

Vorteilhafte Weiterbildungen ergeben sich aus den Unteransprüchen.

Die Vorteile der Erfindung liegen darin, daß bei der Fertigung von Magnetköpfen keine Notwendigkeit mehr besteht, die Kernhälften im Rückschlußbereich exakt zur Deckung zu bringen. Dies bedeutet eine wesentliche Erleichterung für die Fertigung. Ferner bringt die Erfindung eine Verbesserung der Eigenschaften der Magnetköpfe mit sich.

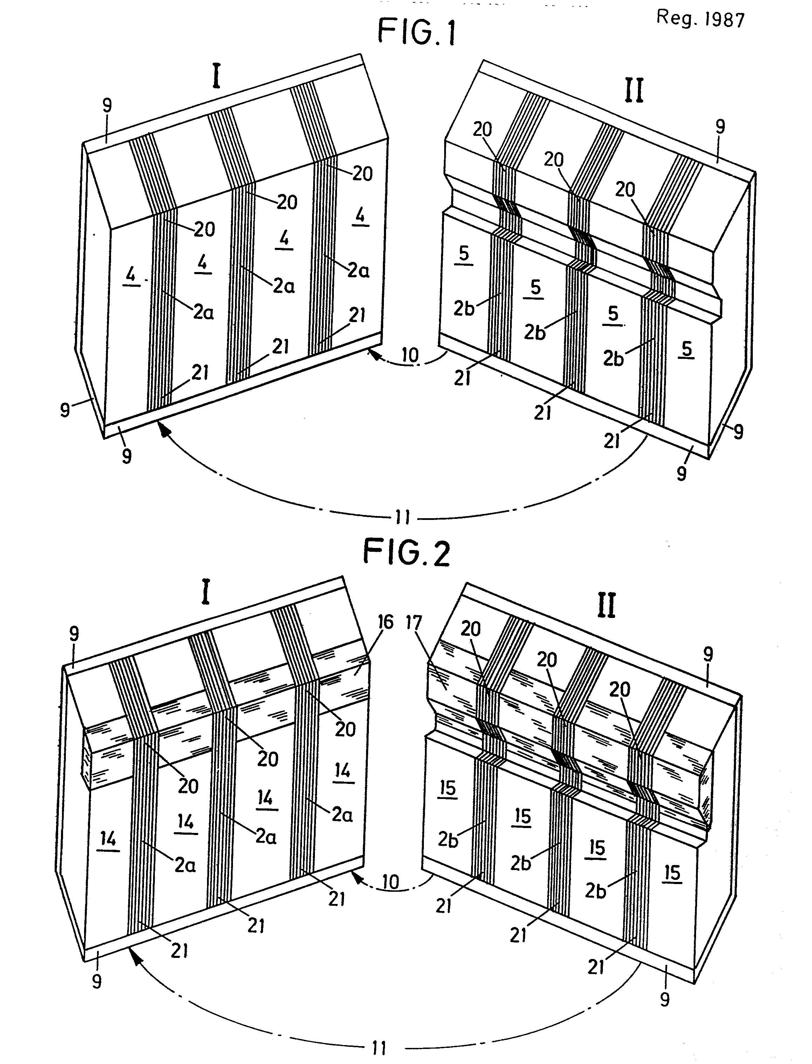

Weitere vorteilhafte Eigenschaften der Magnetköpfe nach der vorliegenden Erfindung ergeben sich aus einem Ausführungsbeispiel, das im folgenden mit Hilfe der Figuren 1 und 2 erläutert wird.

Es zeigen beispielhaft:

Fig. 1     eine perspektivische Darstellung zweier herkömmlicher Blockhälften zur Fertigung von Magnetköpfen vor dem Verbinden zu einem Gesamtblock und

Fig. 2     eine perspektivische Darstellung zweier Blockhälften gemäß der vorliegenden Erfindung zur Fertigung von Magnetköpfen vor dem Verbinden zu einem Gesamtblock.

Die Figur 1 zeigt eine perspektivische Darstellung zweier herkömmlicher Blockhälften zur Fertigung von Magnetköpfen vor dem Verbinden zu einem Gesamtblock. Auf der Blockhälfte I sind auf einem als Stütze dienenden Keramikplättchen 9 abwechselnd nichtmagnetische Kernträgerschichten 4 (beispielsweise aus Glas)
und weichmagnetische Kernhälften 2a aufgebracht.
Die Kernhälften 2a sind nach dem sogenannten Sputtering-Verfahren hergestellt und weisen Schichten aus
einer Fe-Al-Si-Legierung (Sendust-Legierung) auf,
welche voneinander durch dünne $SiO_2$-Filme isoliert
sind.

Die Blockhälfte II besteht ebenfalls aus einem als
Stütze dienenden Keramikplättchen 9, auf das abwechselnd nichtmagnetische Kernträgerschichten 5 und
weichmagnetische Kernhälften 2b aufgebracht sind. Die
Kernhälften 2b sind nach dem sogenannten Sputtering-
Verfahren hergestellt und weisen ebenso wie die Kernträgerhälften 2a Schichten aus einer Fe-Al-Si-Legierung (Sendust-Legierung) auf, welche voneinander
durch dünne $SiO_2$-Filme isoliert sind. Ferner ist in
die Blockhälfte II eine Schleifnut als Freiraum für
die Spulenwindungen eingebracht. Diese beiden im
Vorangegangenen beschriebenen Blockhälften müssen
beim Fertigungsverfahren zu einem Gesamtblock zusammengefaßt werden, wie es durch die gestrichelten
Linien 10 und 11 in Figur 1 angedeutet ist. Dieses
Zusammenfügen erfolgt in der Praxis unter dem Mikroskop, da gewährleistet sein muß, daß sowohl im Bereich
der Magnetkopfspalte (diese Bereiche sind in Fig. 1
mit 20 bezeichnet) als auch im Bereich des Rückschlusses (diese Bereiche sind in Fig. 1 mit 21 bezeichnet) die Kernhälften exakt zur Deckung kommen. In der Praxis erfolgt zunächst eine Justierung im Spaltbereich und anschließend eine Justierung im Rückschlußbereich. Durch letztere wird jedoch die Justierung im Spaltbereich wieder geringfügig verstellt, so daß letztendlich immer nur ein Kompromiß zwischen einer exakten Deckung im Spaltbereich und einer exakten Deckung im Rückschlußbereich gewährleistet werden kann, was zwangsläufig zu Abstrichen bezüglich der Eigenschaften des Magnetkopfes führt.

Dieser Nachteil wird nach der vorliegenden Erfindung durch Magnetköpfe bzw. Blockhälften vermieden, wie sie in Fig. 2 gezeigt werden. Im Unterschied zu den in Fig. 1 gezeigten Kernträgerhälften, die aus einem nichtmagnetischen Substrat, wie beispielsweise Glas, bestehen, bestehen die Kernträgerhälften 14 und 15 nach der vorliegenden Erfindung aus einem weichmagnetischen Material. Im Bereich des Spaltes muß nun allerdings dafür Sorge getragen werden, daß über die weichmagnetischen Kernträgerhälften 14 und 15 keine Nebenschlüsse entstehen. Dies wird dadurch erreicht, daß ausschließlich im Spaltbereich ein nichtmagnetisches Material, beispielsweise Glaseinlagen 16 bzw. 17, zwischen die im Spaltbereich liegenden Teile 20 der Kernhälften 2a und 2b eingebracht wird.

Beim Magnetkopf nach der vorliegenden Erfindung ist im Fertigungsverfahren dann nur noch eine exakte Justierung im Bereich des Spaltes erforderlich. Im Bereich des Rückschlusses ist keine exakte Justierung mehr erforderlich, da der Rückschluß auch durch das weichmagnetische Kernträgermaterial hindurch erfolgen kann.

Durch den Wegfall der Justierung im Rückschlußbereich kann auch die einmal erfolgte Justierung im Spaltbereich nicht mehr verstellt werden, so daß die Eigenschaften des Magnetkopfes nicht mehr beeinträchtigt werden. Dadurch wird mit der vorliegenden Erfindung sowohl eine Erleichterung des Fertigungsprozesses als auch eine Verbesserung der Eigenschaften des Magnetkopfes erreicht.

Die einzelnen Magnetköpfe erhält man schließlich durch eine mittels Präzisionstrennmaschinen durchgeführte Zersägung der Blöcke.

MAGNETKOPF MIT WEICHMAGNETISCHEN
KERNHÄLFTEN


PATENTANSPRÜCHE


1. Magnetkopf, mit einem aus zwei Kernhälften bestehenden Kern, wobei die Kernhälften aus mehreren, voneinander isolierten weichmagnetischen Schichten aufgebaut sind, und mit Kernträgern, die jeweils beidseits der Kernhälften zur Stützung derselben angeordnet sind, d a d u r c h   g e - k e n n z e i c h n e t ,   daß zur Gewährleistung eines optimalen Magnetflusses, insbesondere im Rückschlußbereich, die Kernträger aus weichmagnetischem Material bestehen, und daß im Spaltbereich durch Einsetzen von nichtmagnetischen Materialien magnetische Nebenschlüsse vermieden werden.


2. Magnetkopf nach Anspruch 1,   d a d u r c h   g e k e n n z e i c h n e t ,   daß die Kernträger aus weichmagnetischem Ferrit bestehen.

3. Magnetkopf nach Anspruch 1 oder 2, d a - d u r c h  g e k e n n z e i c h n e t , daß im Spaltbereich Glassubstrate zur Vermeidung von magnetischen Nebenschlüssen eingesetzt sind.

Reg. 1987

# FIG.1

# FIG.2